# EUROPÄISCHE PATENTSCHRIFT

(11) **EP 0 925 449 B1**
(45) Veröffentlichungstag und Bekanntmachung des Hinweises auf die Patenterteilung: **02.04.2003**
(21) Anmeldenummer: 97909238.4
(22) Anmeldetag: 09.09.1997
(51) Int. Cl.: F04B 9/04, F16C 21/00

(54) **RADIALKOLBENPUMPE MIT EINSEITIG GESCHLOSSENER LAGERSCHALE**
RADIAL PISTON PUMP WITH A CLOSED ONE-SIDED BEARING SHELL
POMPE A PISTON RADIAL AVEC COQUILLE DE PALIER FERMEE D'UN COTE

(30) Priorität: 09.09.1996 DE 19636508
(43) Veröffentlichungstag der Anmeldung: 30.06.1999
(73) Patentinhaber: Continental Teves AG & Co. oHG, 60488 Frankfurt (DE)
(72) Erfinder: DINKEL, Dieter, D-65817 Eppstein (DE); REINARTZ, Hans-Dieter, D-60439 Frankfurt am Main (DE); VOLZ, Peter, D-64291 Darmstadt (DE); WAGNER, Christoph, D-61231 Bad Nauheim (DE); WEISBROD, Helmut, D-61231 Bad Nauheim (DE)
(74) Vertreter: Portwich, Peter
(86) Internationale Anmeldenummer: EP9704929
(87) Internationale Veröffentlichungsnummer: WO98010191

(56) Entgegenhaltungen:
- EP-A- 0 414 933
- EP-A- 0 539 849
- FR-A- 2 231 261
- FR-A- 2 256 689
- GB-A- 2 034 862

## Beschreibung

Die Erfindung betrifft eine Radialkolbenpumpe, insbesondere für geregelte Bremssysteme, gemäß dem Oberbegriff von Anspruch 1.

Derartige Pumpen werden in geregelten Bremssystemen zur Erzeugung des notwendigen Drucks einer Hydraulikflüssigkeit benötigt, durch welche die einzelnen Radbremsvorrichtungen in der durch eine Steuerung vorgegebenen Abfolge ansteuerbar sind. Eine solche Radialkolbenpumpe ist beispielsweise in der DE 38 40 691 A1 beschrieben.

Die prinzipielle Arbeitsweise von Radialkolbenpumpen besteht darin, daß durch eine im Gehäuse gelagerte Exzenterwelle zumindest zwei abwechselnd Arbeitshübe ausführende Kolben angetrieben werden. Um ein Schleifen der Exzenterwelle an den antriebsseitigen Enden der Kolben zu vermeiden, ist am exzentrischen Teil der Antriebswelle ein Radiallager befestigt, dessen Lageraußenschale gegenüber der Welle drehbar ist und der exzentrischen Bewegung des Exzenters folgt. Auf diese Weise können die Kolben über das Exzenterlager angetrieben werden, ohne daß eine Relativbewegung zwischen Kolben und Lagerschale erfolgt. Beispielsweise in der EP 0 539 849 A1 ist eine derartige Radialkolbenpumpe offenbart.

Die Seitenwände der Lagerschalen oder mit diesen fest verbundene Teile können jedoch gegenüber dem Gehäuse axiale Bewegungen durchführen und an sich drehenden Teilen, wie beispielsweise einem Wellenlager, schleifen. Außerdem kann es zu einer Relativbewegung und dadurch zu Verschleiß zwischen der Lagerschale und den Kolben kommen, wenn sich die Lagerschale mit den drehenden Teilen mit dreht. Auf jeden Fall muß aber die Schleifbewegung der Lagerschale an sich drehenden Teilen sicher verhindert werden. Dies ist besonders dann wichtig, wenn die Arbeitsgeschwindigkeit derartiger Pumpen zur Erhöhung des benötigten Drucks erhöht wird oder bei gleichbleibender Arbeitsgeschwindigkeit die Pumpen unter erhöhter Belastung arbeiten.

Das Dokument FR 2 256 689 A offenbart ein Schneckengetriebe, dessen Ritzelwelle in einem Lager gelagert ist, dessen Lagerschale eine geschlossene Bodenwand aufweist, wobei zwischen Bodenwand und dem Ende der Ritzelwelle eine Kugel und weitere Bauteile vorgesehen sind.

In der FR 2 231 261 A ist eine Kardangelenkverbindung offenbart, wobei die Enden der Kardanwellen jeweils ebenfalls in einem Lager mit einer geschlossenen Lagerschale angeordnet sind und zwischen der Lagerschale und der Kardanwelle ein Abstandsmittel vorgesehen ist.

Die Aufgabe der Erfindung ist es, die Lagerschale des Radiallagers der Pumpe im Abstand zu anderen Teilen, insbesondere einem Lager der Antriebswelle, zu halten und dabei auftretende Reibungskräfte und -momente zu minimieren.

Diese Aufgabe wird durch die sich aus Anspruch 1 ergebende Merkmalskombination gelöst. Die Erfindung besteht im Prinzip darin, die radiale Seitenwand der Lagerschale des Radiallagers auf der stirnwandigen Seite der Antriebswelle zu verschließen. Damit erhält die Lagerschale ein in etwa topfförmiges Aussehen, wobei die Wand des Topfes zu einer Erhöhung der Steifigkeit der Lagerschale beiträgt. Weiterhin ist die Bewegung der Lagerschale in Richtung zu dem Gehäuselager für die Antriebswelle begrenzt, da zuvor die Wand an der Stirnfläche der Antriebswelle anschlägt. Ein weiterer Vorteil besteht darin, daß die Lagerschale am offenen Ende der Welle geschlossen und somit dieses Wellenende gekapselt ist. Hierdurch erhält man Vorteile hinsichtlich der Schmierung und dem Fernhalten möglicher Schmutzpartikel.

Um die Reibkräfte zwischen dem sich drehenden Wellenende und dem im wesentlichen drehfest gehaltenen Radiallager abzusenken, ist die Lagerschale in Form einer Bodenwand ausgebildet, deren Innenfläche gegenüber einer Stirnfläche des Exzenterabschnitts durch Abstandsmittel in Abstand gehalten ist. Dabei sind die Abstandsmittel zwischen dem drehenden Exzenterabschnitt und der im wesentlichen drehfest angeordneten Bodenwand reibungsarm ausgestaltet. Die Abstandsmittel werden also erfindungsgemäß so ausgebildet, daß sie für eine möglichst große Reibungsarmut bzw. Reibmomentenfreiheit sorgen.

Vorzugsweise hat das Abstandsmittel eine gekrümmte Oberfläche, die im wesentlichen punktförmig an der gegenüberliegenden zugeordneten Fläche anliegt. Gemäß einer Weiterbildung der Erfindung ist das Abstandsmittel eine kugelsektorförmige Ausprägung oder ein anderer gerundeter Vorsprung in der Bodenwand. Da die Außenschale des Radiallagers der Bewegung des Exzenters folgt, besteht zwischen dem Vorsprung und der zugeordneten Bodenwand nur eine Drehbewegung an einer punktförmigen Auflagefläche, so daß die Reibungsverluste hier besonders klein sind. Man erhält somit eine reibungsarme, definierte Anschlagfläche. Da der Vorsprung außerdem im Zentrum der sich drehenden Welle läuft, entsteht kein Reibmoment, weil der Reibradius hier "null" ist.

Weitere Merkmale und Vorteile der vorliegenden Erfindung ergeben sich aus den Unteransprüchen sowie der Beschreibung in Zusammenhang mit den beigefügten Zeichnungen. Es zeigen:
- Fig. 1: in teilweise geschnittener Ansicht den Aufbau eines aus der DE 38 40 691 A1 bekannten Radiallagers für eine Kolbenpumpe,
- Fig. 2: in analoger Ansicht ein Radiallager mit heruntergezogener Seitenwand,
- Fig. 3: ebenfalls in teilweise geschnittener Darstellung ein Ausführungsbeispiel eines Radiallagers für eine Kolbenpumpe gemäß der vorliegenden Erfindung,
- Fig. 4: gemäß einem anderen Ausführungsbeispiel der Erfindung, teilweise im Schnitt, eine Motorwelle, die zusätzlich an ihrem freien Ende im Pumpengehäuse gelagert ist,
- Fig. 5: ein weiteres Ausführungsbeispiel, bei dem ähnlich wie in Fig. 4 das Wellenende im Pumpengehäuse gelagert ist, und
- Fig. 6: in teilweise geschnittener Ansicht ein weiteres Ausführungsbeispiel eines Radiallagers einer Kolbenpumpe.

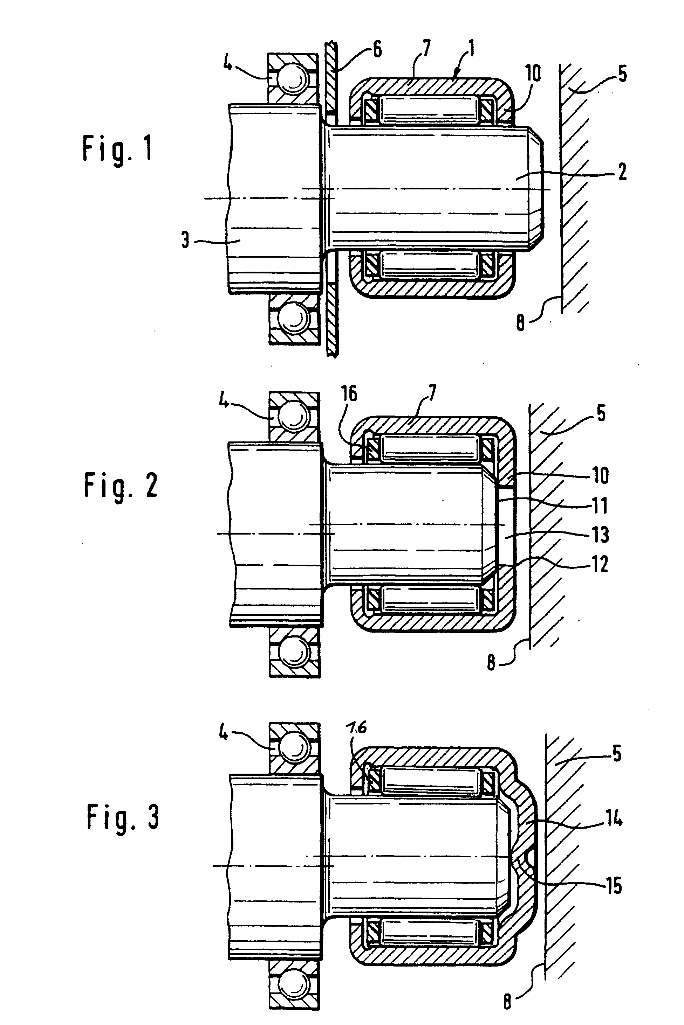

In Fig. 1 wird von einer nur teilweise dargestellten Pumpe ausgegangen, wie sie in der DE 38 40 691 A1 vorbeschrieben ist. Die vorbeschriebene Pumpe weist ein System auf, bei dem das Radiallager 1 in beiden Achsen verschieblich auf dem Exzenterabschnitt 2 angeordnet ist. Da die Seitenflächen 10 des Radiallagers 1 nur an ortsfesten Teilen 6 anschlagen können und seinerzeit Pumpen noch nicht besonders hohen Belastungen ausgesetzt waren, hatte eine derartige Konstruktion durchaus Vorteile. Aufgrund der geforderten kurzen Bauweise sind aber die aus der bekannten Konstruktion ersichtlichen, sich in radialer Richtung erstreckenden, Trennscheiben 6 nicht mehr zulässig. Die sich drehenden Wellenabschnitte 2, 3 und die auf der Welle 3 sitzenden, drehenden Lagerschalen 7 sind dann dem Radiallager 1 auf dem Exzenterabschnitt 2 unmittelbar zugänglich. In Fig. 1 ist das Wellenlager 4, in dem die Antriebswelle 3 in dem Gehäuse 5 gelagert ist, noch durch eine nachteilige gehäusefeste Trennscheibe 6 vom Lager 1 abgetrennt. Die Lagerschale 7 liegt an nicht dargestellten Kolben an und ist in axialer und radialer Richtung beweglich. Sie kann hier mit drehenden Teilen nicht in Berührung kommen, sondern allenfalls eine axiale Bewegung in Richtung der Trennscheibe 6 oder der Wand 8 des Gehäuses 5 ausführen.

Fig. 2 zeigt einen Vorschlag, eine Bewegung der Lagerschale 7 in Fig. 2 nach links in axialer Richtung des Wellenlagers 4 zu verhindern, wobei die schützende Trennscheibe 6 weggelassen wurde. Dies geschieht dadurch, daß die Seitenwand 10 bis zur Stirnfläche 11 des Exzenterabschnitts 2 heruntergezogen wurde, so daß hier ein Anschlag entsteht. Bei einem Axialschub der Welle 3, beispielsweise bei derem Anlaufen, können hier allerdings erhebliche Reibungs- bzw. Reibmomentenwirkungen gegenüber dem sich drehenden Exzenterabschnitt 2 auftreten, da die Seitenwand 10 diese Axialkräfte aufnimmt. Außerdem kann es geschehen, daß die Kante 12 der Öffnung 13 in der Seitenwand 10 der Lagerschale 7 an der Gehäusewand 8 reibt oder die Kante 12 speziell bearbeitet werden muß, um dies zu verhindern.

Erfindungsgemäß wird daher in Fig. 3 die Seitenwand 10 geschlossen, so daß eine in sich geschlossene Bodenwand 14 entsteht, die ebenfalls als Anschlag gegenüber der Stirnfläche 11 des Exzenterabschnitts 2 dient. Für die Erfindung sehr wichtig ist nun, daß an der Bodenwand 14 nach innen vorspringend ein vorzugsweise abgerundeter Vorsprung 15 vorgesehen ist, welcher beim Anschlagen an die Welle 3 nur punktförmig an deren Stirnfläche 11 anliegt, so daß sich nur vernachlässigbare Reibungsverluste ergeben. Der Vorsprung 15 kann in einfacher Weise dadurch ausgebildet sein, daß er durch eine Einprägung oder Durchstellung 15 in der Bodenwand 14 hergestellt wird. Dabei wird man die Mittelachse der Durchstellung 15 bevorzugt so legen, daß sie mit der Mittelachse des Exzenterabschnitts 2 zusammenfällt, also außerhalb der Mittelachse der Antriebswelle 3 liegt, da ja die Lagerschale 7 ihren Radialabstand zur Mantelfläche des Exzenterabschnitts nicht ändert. Wenn der Vorsprung 15 nämlich in der Mitte der Stirnfläche 11 anliegt, wird zusätzlich das Reibmoment zu "null", da der Reibradius zu "null" wird.

Aus Fig. 3 sind ferner seitliche Abstandsringe 16, wie sie bereits in Fig. 2 gezeigt sind, ersichtlich. Es ist aber durch die geschlossene Lagerschale 7 auch möglich, ohne Abstandsringe 16 und ohne Lagerkäfig auszukommen bzw. bei einem Käfig auf seitliche Abstandsringe 16 zu verzichten.

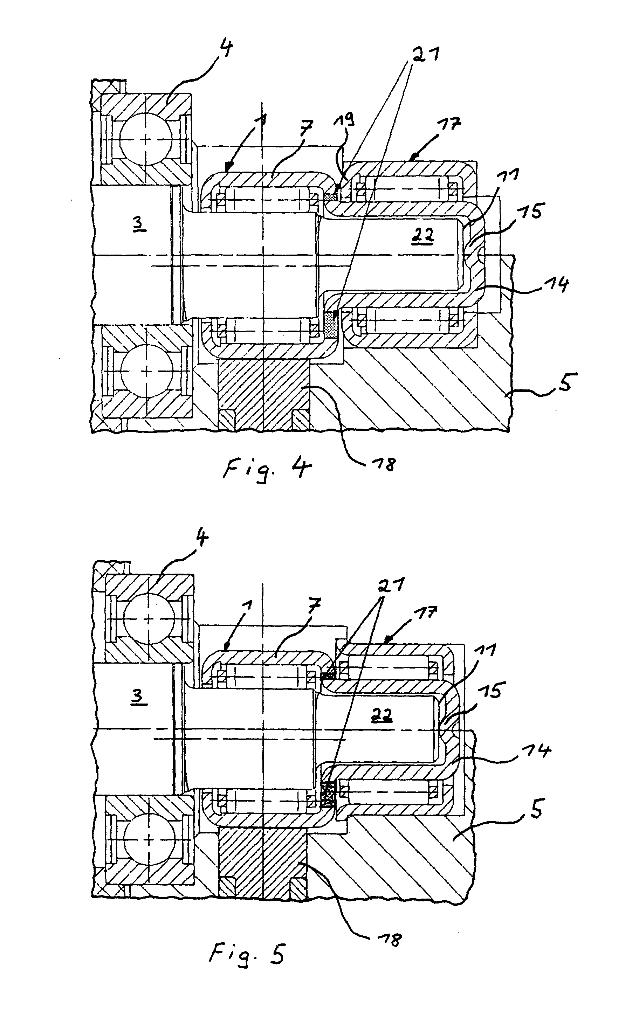

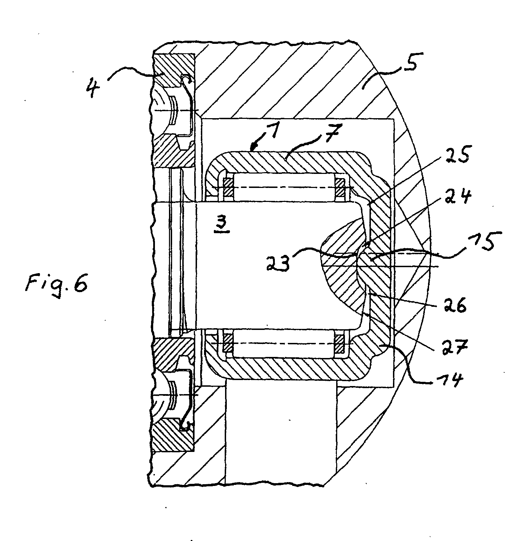

Die Fig. 4 und 5 zeigen in teilweise geschnittener Ansicht zwei weitere Ausführungsbeispiele der vorliegenden Erfindung. Hier ist die Motorwelle 3 durch insgesamt drei Lager 1, 17 abgestützt, wobei sich ein drittes Stützlager am anderen Ende der Welle 3 im Motorraum befindet und hier nicht dargestellt ist. Die zu Fig. 3 zusätzliche Abstützung erfolgt am Wellenabschnitt 22 über ein weiteres Lager 17. Die Stelle 21 der Lagerschale 7 am Übergang zum zweiten Lager 17 ist dabei vorteilhaft so ausgebildet, daß eine radiale Beweglichkeit der Schale 7 gegeben ist und dennoch axiale Kräfte übertragen werden können.

Auch diese beiden Beispiele bieten die Vorteile der in Fig. 3 dargestellten Ausführungsform. Die Aufnahme der axialen Lagerkräfte in Motorrichtung erfolgt über den Vorsprung 15 zentrisch an der Stirnfläche 11 der Welle 3. Bedingt durch den stark verkleinerten, bzw. nicht mehr vorhandenen Reibradius wird die Lagerschale 7 des Exzenterlagers 1 nicht mehr zum Mitdrehen angeregt. Der Verschleiß zwischen den Kolben 18 und dem Lager 1 wird so minimiert. Beim Anlaufen der Bodenwand 14 gegen das Gehäuse 5 auf der Seite eines nicht dargestellten Ventilblocks (Fig. 5) bzw. in Fig. 4 gegen die Schale 19 des Lagers 17 verringert sich der Verschleiß aufgrund der großen Anlauffläche und der damit verbundenen kleinen Flächenpressung. Wegen der geschlossenen Form des Lagers 1 ist das Lagerfett besser gegen Verunreinigung und bei Erhitzen gegen Auslaufen geschützt. Dies bringt eine erhöhte Standzeit des Lagers 1 sowie Vorteile bei der Geräuschentwicklung der Pumpe. Durch die geschlossene Form der Lagerschale 7 erhöht sich ferner die Steifigkeit des Lagers 1 zur Aufnahme von Radialkräften, die insbesondere bei Antriebsschluf- und/oder Fahrstabilitätsregelungen eines Fahrzeuges beidseitig die Pumpe belasten, was bisher den Einsatz eines teuren Massivlagers erforderlich machte. Außerdem erlaubt die geschlossene Form des Lagers 1 dessen kostengünstige Herstellung als Tiefziehteil.

Dadurch, daß in Fig. 4 und 5 die Welle 3 gleichzeitig an drei Lagern 1, 17 abgestützt ist, ergeben sich gegenüber der Ausführungsform nach Fig. 3 noch die zusätzlichen Vorteile, daß der Motor ruhiger läuft, was insgesamt zu einer Geräuschreduzierung des Motor-Pumpenaggregats führt, und daß das Lager 4 weniger belastet wird.

In Fig. 6 ist eine weitere Ausbildungsmöglichkeit der vorliegenden Erfindung teilweise im Schnitt dargestellt, bei der das erfindungsgemäße Exzenterlager 1 einer Radialkolbenpumpe noch verschleißfester ausgebildet ist. Nachteilig an den obigen Ausführungsformen ist, daß Verschleiß durch axiales Anlaufen des Lagers 1 an der Motorwelle 3 hervorgerufen wird. Dieser Verschleiß schreitet aufgrund mangelnder Schmierung an der Berührungsstelle zwischen Welle 3 und Lager 1 schnell voran. Diese Schmierungsverhältnisse werden durch die Ausführungsform nach Fig. 6 entscheidend verbessert.

Die rotierende Welle 3 weist dazu mit besonderem Vorteil eine Einbuchtung 23 auf, die mit der Lagerschale 7 und insbesondere mit dem Vorsprung 15 der Schale 7 zusammenwirkt. Durch diese Maßnahme bildet sich eine Fettkammer 24 zwischen der Welle 3 und der Lagerschale 7. In Fig. 6 steht dann das Fett in der Kammer 24, während der Vorsprung 15 in der Kammer 24 umläuft.

Zusätzlich kann gemäß dieser Ausführungsform die Bodenwand 14 der Lagerschale 7 so ausgestaltet sein, daß entstehender Metallabrieb nicht in den Bereich der Fettkammer 24 gelangt, sondern im Bereich 25 aufgefangen wird. Dazu ist mit Vorteil zwischen Bodenwand 14 und Abstandsmittel 15 zumindest ein enger Spalt 26 vorgesehen, der den Abrieb von der Kammer 24 fernhält. Die Schmierung an der Reibstelle zwischen der Welle 3 und dem Abstandsmittel 15 kann desweiteren noch dadurch verbessert werden, daß an der Stirnseite der Welle 3 bzw. im Wellenboden eine Spiralnut 27 vorgesehen ist, die entweichendes Fett wieder in die Fettkammer 24 zurückfördert.

Besonders vorteilhaft bei der erfindungsgemäßen Radialkolbenpumpe ist es, daß auf einen inneren Lagerring verzichtet werden kann. Auch lassen sich mit dem Radiallager vorab bestückte Wellenden leicht in ortsfeste Lageröffnungen einfügen.

## Patentansprüche

1. Radialkolbenpumpe, insbesondere für geregelte Bremssysteme, mit mindestens einem Arbeitskolben (18), wobei dieser Arbeitskolben (18) in einem Zylinderblock am Gehäuse (5) angeordnet ist und mittels einer in den Zylinderblock (5) ragenden Antriebswelle (3) angetrieben wird, auf deren Exzenterabschnitt (2) ein Radiallager (1) angeordnet ist, durch dessen gegenüber der Antriebswelle drehbaren Lagerschale (7) das radial nach innen aus dem Zylinderblock ragende Kolbenende beaufschlagbar ist, **dadurch gekennzeichnet, daß** die Lagerschale (7) auf der dem Ende des Exzenterabschnitts (2) zugeordneten Seite in Form einer Bodenwand (14) geschlossen ausgebildet ist, wobei an der Innenfläche der Bodenwand (14) ein auf eine Stirnfläche (11) des Exzenterabschnitts (2) gerichteter, zentrischer Vorsprung (15) als gegenüber der Stirnfläche (11) reibungsarm ausgestaltetes Abstandsmittel vorgesehen ist.

2. Radialkolbenpumpe nach Anspruch 1, **dadurch gekennzeichnet, daß** der Vorsprung (15) ein im wesentlichen kugelsektorförmiger, vorzugsweise durch Herausprägen aus der Bodenwand (14) hergestellter Vorsprung ist, der etwa punktförmig an die Stirnfläche (11) des Exzenterabschnitts (2) anlegbar ist.

3. Radialkolbenpumpe nach Anspruch 1 oder 2, **dadurch gekennzeichnet, daß** das Radiallager (1) ein Wälzlager ist und die Walzen oder Kugeln in axialer Richtung direkt durch die seitlichen Ränder der Lagerschale (7) gefangen sind.

4. Radialkolbenpumpe nach einem der Ansprüche 1 bis 3, **dadurch gekennzeichnet, daß** auf der der Bodenwand (14) abgewandten Seite des Radiallagers (1) sich radial erstreckende Teile, wie beispielsweise Wellenlagerschale, Wellenabsätze oder ähnliches, zum Radiallager (1) hin frei zugänglich sind.

5. Radialkolbenpumpe nach einem der vorangegangenen Ansprüche, **dadurch gekennzeichnet, daß** die Lagerschale (7) als Tiefziehteil ausgebildet ist.

6. Radialkolbenpumpe nach einem der vorangegangenen Ansprüche, **dadurch gekennzeichnet, daß** die Antriebswelle (3) an ihrem stirnseitigen Abschnitt (22) durch ein weiteres Lager (17) abgestützt ist.

7. Radialkolbenpumpe nach einem der vorangegangenen Ansprüche, **dadurch gekennzeichnet, daß** die Antriebswelle (3) zumindest eine Einbuchtung (23) aufweist.

8. Radialkolbenpumpe nach Anspruch 7, **dadurch gekennzeichnet, daß** die Einbuchtung (23) als Fettkammer (24) ausgebildet ist.

9. Radialkolbenpumpe nach einem der vorangegangenen Ansprüche, **dadurch gekennzeichnet, daß** zwischen der Welle (3) und der Lagerschale (7) ein Bereich (25) angeordnet ist, in dem vorzugsweise Abrieb aufgefangen wird.

10. Radialkolbenpumpe nach Anspruch 9, **dadurch gekennzeichnet, daß** zwischen der Welle (3) und der Lagerschale (7) zumindest ein Spalt (26) ausgebildet ist.

11. Radialkolbenpumpe nach einem der vorangegangenen Ansprüche, **dadurch gekennzeichnet, daß** am Ende der Welle (3) eine Spiralnut (27) vorgesehen ist.

## Revendications

1. Pompe à pistons radiaux, en particulier pour systèmes de freinage à régulation, comportant au moins un piston de travail (18), ce piston de travail (18) étant disposé dans un bloc cylindres sur le carter (5) et étant entraîné au moyen d'un arbre d'entraînement (3) s'engageant dans le bloc cylindres (5), sur le tronçon d'excentrique (2) duquel est disposé un palier radial (1) dont le coussinet de palier (7), tournant par rapport à l'arbre d'entraînement, agit sur l'extrémité du piston dépassant radialement vers l'intérieur du bloc cylindres, **caractérisée en ce que** le coussinet de palier (7) est réalisé fermé sur le côté associé à l'extrémité du tronçon d'excentrique (2), sous la forme d'une paroi de fond (14), sur la surface intérieure de la paroi de fond (14) étant prévue une saillie (15) centrée, dirigée vers une face frontale (11) du tronçon d'excentrique (2) et réalisée en tant que moyen d'écartement présentant une faible friction par rapport à la face frontale (11).

2. Pompe à pistons radiaux selon la revendication 1, **caractérisée en ce que** la saillie (15) est une saillie sensiblement en forme de secteur de sphère, réalisée de préférence par estampage dans la paroi de fond (14) et qui peut s'appliquer approximativement sous forme de point contre la face frontale (11) du tronçon d'excentrique (2).

3. Pompe à pistons radiaux selon la revendication 1 ou 2, **caractérisée en ce que** le palier radial (1) est un palier de roulement et les rouleaux ou billes sont directement retenus dans la direction axiale par les bords latéraux du coussinet de palier (7).

4. Pompe à pistons radiaux selon l'une des revendications 1 à 3, **caractérisée en ce que** sur le côté du palier radial (1) tourné à l'opposé de la paroi de fond (14), des parties s'étendant radialement, telles que par exemple un coussinet de palier d'arbre, des gradins d'arbre ou similaires, sont librement accessibles vers le palier radial (1).

5. Pompe à pistons radiaux selon l'une des revendications précédentes, **caractérisée en ce que** le coussinet de palier (7) est une pièce obtenue par emboutissage profond.

6. Pompe à pistons radiaux selon l'une des revendications précédentes, **caractérisée en ce que** l'arbre d'entraînement (3) est soutenu, sur son tronçon frontal (22), par un autre palier (17).

7. Pompe à pistons radiaux selon l'une des revendications précédentes, **caractérisée en ce que** l'arbre d'entraînement (3) présente au moins un renfoncement (23).

8. Pompe à pistons radiaux selon la revendication 7, **caractérisée en ce que** le renfoncement (23) est réalisé en tant que chambre à graisse (24).

9. Pompe à pistons radiaux selon l'une des revendications précédentes, **caractérisée en ce qu'**une zone (25) dans laquelle sont recueillis de préférence les résidus d'abrasion, est disposée entre l'arbre (3) et le coussinet de palier (7).

10. Pompe à pistons radiaux selon la revendication 9, **caractérisée en ce qu'**au moins une fente (26) est réalisée entre l'arbre (3) et le coussinet de palier (7).

11. Pompe à pistons radiaux selon l'une des revendications précédentes, **caractérisée en ce qu'**une rainure en spirale (27) est prévue à l'extrémité de l'arbre (3).

## Claims

1. Radial piston pump, more particularly for controlled brake systems, which includes at least one working piston (18), said working piston (18) being arranged in a cylinder block on the housing (5) and driven by means of a drive shaft (3) which extends into the cylinder block (5), wherein a radial bearing (1) is mounted on the eccentric part (2) of said shaft, and the piston end which extends out of the cylinder block in a radially inward direction is adapted to be acted upon by a bearing shell (7) that is rotatable in relation to the drive shaft,
**characterized in that** the bearing shell (7), on the side associated with the end of the eccentric part (2), is configured as a closed bottom wall (14), with a centric projection (15) pointing to an end surface (11) of the eccentric part (2) being provided on the inside surface of the bottom wall (14) as a spacer means producing low friction in relation to the end surface (11).

2. Radial piston pump as claimed in claim 1,
**characterized in that** the projection (15) is a generally spherical-sector shaped protrusion, preferably pressed out of the bottom wall (14), which is movable into abutment on the end surface (11) of the eccentric part (2) in a roughly punctiform manner.

3. Radial piston pump as claimed in claim 1 or 2,
**characterized in that** the radial bearing (1) is a roller bearing and the rollers or balls are seized in an axial direction directly by the lateral edges of the bearing shell (7).

4. Radial piston pump as claimed in any one of claims 1 to 3,
**characterized in that** parts extending in a radial direction such as the shaft bearing shell, shaft steps, or similar elements, are freely accessible towards the radial bearing (1) on the side of the radial bearing (1) remote from the bottom wall (14).

5. Radial piston pump as claimed in any one of the preceding claims,
**characterized in that** the bearing shell (7) is a deepdrawn part.

6. Radial piston pump as claimed in any one of the preceding claims,
**characterized in that** the drive shaft (3) is supported by another bearing (17) on its frontal portion (22).

7. Radial piston pump as claimed in any one of the preceding claims,
**characterized in that** the drive shaft (3) includes at least one bulge (23).

8. Radial piston pump as claimed in claim 7,
**characterized in that** the bulge (23) is configured as a grease chamber (24).

9. Radial piston pump as claimed in any one of the preceding claims,
**characterized in that** positioned between the shaft (3) and the bearing shell (7) is an area (25) in which, preferably, abraded parts are collected.

10. Radial piston pump as claimed in claim 9,
**characterized in that** at least one slot (26) is provided between shaft (3) and bearing shell (7).

11. Radial piston pump as claimed in any one of the preceding claims,
**characterized in that** a spiral groove (27) is provided at the end of the shaft (3).
